# EUROPEAN PATENT SPECIFICATION

(11) **EP 3 296 597 B1**
(45) Date of publication and mention of the grant of the patent: **19.02.2020**
(21) Application number: 16792725.0
(22) Date of filing: 11.05.2016
(51) Int. Cl.: F16J 1/16, F02B 75/04, F02B 75/32, F02B 25/02, F01B 9/02, F02B 75/02

(54) **CROSSHEAD ENGINE**
KREUZKOPFMOTOR
MOTEUR À CROSSE

(30) Priority: 11.05.2015 JP 2015096716
(43) Date of publication of application: 21.03.2018
(73) Proprietor: IHI Corporation, Tokyo 135-8710 (JP)
(72) Inventor: YAMADA Takeshi, Tokyo 135-8710 (JP); UMEMOTO Yoshiyuki, Aioi-shi Hyogo 678-0041 (JP)
(74) Representative: TBK
(86) International application number: PCT/JP2016/064050
(87) International publication number: WO 2016/182000

(56) References cited:
- EP-A2- 0 197 852
- EP-A2- 2 687 707
- DE-A1- 19 835 146
- DE-A1- 19 835 146
- JP-A- S6 435 029
- JP-A- 2014 020 375
- JP-A- 2015 503 058
- JP-U- H 048 739
- US-A- 2 250 492
- US-A- 4 140 091
- US-A1- 2009 205 615

## Description

### [Technical Field]

The present disclosure relates to a crosshead engine according to the preamble of claim 1, in which a crosshead is connected to a piston rod, and a crosshead engine.

Priority is claimed on Japanese Patent Application No. 2015-96716, filed May 11, 2015.

### [Background Art]

In crosshead engines which are widely used in marine engines, a crosshead is provided at an end of a piston rod to which a piston is fixed. A connecting bar (a connecting rod) connects the crosshead and a crankshaft, and a reciprocating motion of the crosshead is converted into a rotating motion of the crankshaft.

An engine of Patent Document 1 is such a crosshead engine in which a hydraulic piston is disposed in a crosshead and the hydraulic piston is operated by oil pressure so that the position of the piston at top dead center is changed and the compression ratio is variable.

Patent Document 2 discloses a further crosshead engine having the features of the preamble of claim 1.

### [Citation List]

### [Patent Document]

[Patent Document 1]
   JP 2014 020 375 A
[Patent Document 2]
   EP 2 687 707 A2

### [Summary of Invention]

### [Technical Problem]

When a hydraulic chamber is provided inside the crosshead, as described in Patent Document 1, the crosshead may be deformed by the influence of oil pressure inside the hydraulic chamber, and the bearing performance of a crosshead pin may be degraded.

An object of the present disclosure is to further develop a crosshead engine according to the preamble of claim 1 such that it is capable of suppressing degradation of bearing performance of a crosshead pin due to the influence of oil pressure inside a hydraulic chamber formed in a crosshead.

### [Solution to Problem]

This object is achieved by a crosshead engine having the features of the preamble of claim 1. Advantageous further developments are set out in the dependent claims. A first end of a piston rod fixed to a piston and a second end of a connecting rod connected to a crankshaft are connected through a crosshead, wherein the crosshead includes a crosshead bearing provided at the second end of the connecting rod, a crosshead pin pivotally supported by the crosshead bearing, a hydraulic chamber provided in the crosshead pin and configured to apply an oil pressure to a first end side of the piston rod when the first end side of the piston rod is inserted therein, thereby changing a relative position between the piston and the crosshead pin, and a deformation inhibiting layer provided at the crosshead pin, located outward in a radial direction of the first end of the piston rod inserted into the hydraulic chamber, and configured to inhibit deformation of the crosshead pin due to the oil pressure in the hydraulic chamber.

### [Effects of Invention]

According to a crosshead engine of the present disclosure, it is possible to suppress degradation of bearing performance of a crosshead pin due to an influence of oil pressure inside a hydraulic chamber formed in a crosshead.

### [Brief Description of Drawings]

FIG. 1 is a view showing an entire constitution of a uniflow scavenging two-cycle engine.
FIG. 2A is a view showing a connection portion between a piston rod and a crosshead pin.
FIG. 2B is a view showing the connection portion between the piston rod and the crosshead pin.
FIG. 3A is a view showing a change in a relative position between the piston rod and the crosshead pin.
FIG. 3B is a view showing the change in the relative position between the piston rod and the crosshead pin.
FIG. 4 is a view showing a deformation inhibiting layer.
FIG. 5A is a view showing a deformation inhibiting layer and a cylindrical member in a modified example.
FIG. 5B is a view showing a cylindrical member in a modified example.
FIG. 5C is a view showing a cylindrical member in a modified example.

### [Description of Embodiments]

Preferred embodiments of the present disclosure will be described in detail with reference to the accompanying drawings. Dimensions, materials, other specific numerical values, and so on, indicated in these embodiments are merely examples for facilitating comprehension of the disclosure, and unless indicated otherwise, the present disclosure is not limited thereto. Note that in the specification and drawings, elements having substantially the same functions and constitutions will be given the same reference numerals, and a duplicate description thereof will be omitted. Further, elements not directly related to the present disclosure are not shown in the drawings.

In the following embodiments, a so-called dual fuel type engine in which one of a gas operation mode for mainly burning a fuel gas as a gaseous fuel and a diesel operation mode for burning fuel oil as a liquid fuel can be selectively performed will be described. Also, a case in which an engine (a two-cycle engine or a two-stroke engine) that completes one cycle in two strokes is formed as a uniflow scavenging type in which gas flows in one direction in a cylinder will be described. However, a type of the engine is not limited to the dual fuel type, the two-cycle type, or the uniflow scavenging type but need only be a crosshead engine.

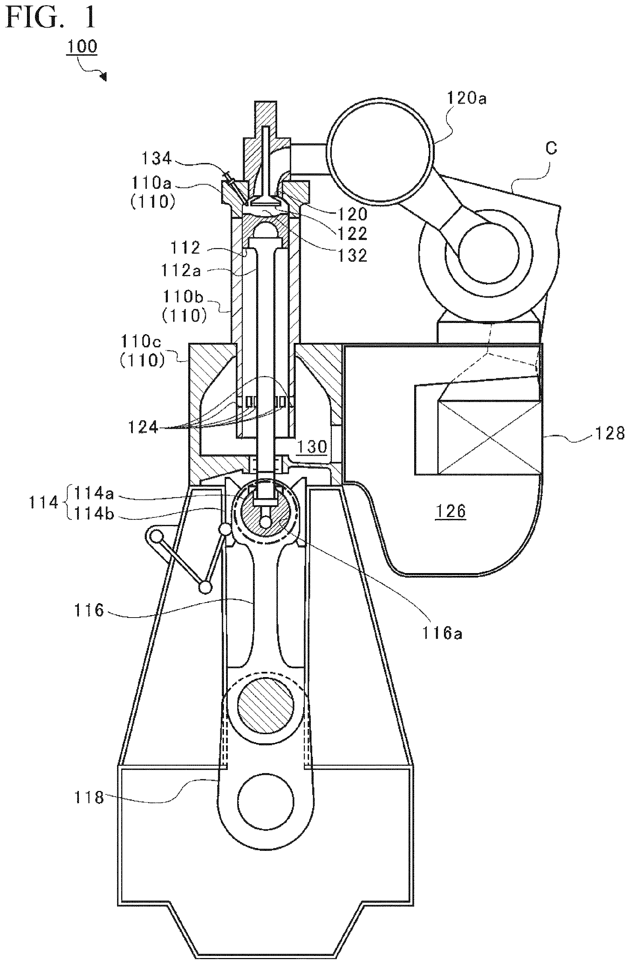

FIG. 1 is a view showing an entire constitution of a uniflow scavenging two-cycle engine 100 (a crosshead engine). For example, the uniflow scavenging two-cycle engine 100 of the embodiment is used in a ship or the like. Specifically, the uniflow scavenging two-cycle engine 100 includes a cylinder 110, a piston 112, a crosshead 114, a connecting rod 116, a crankshaft 118, an exhaust port 120, an exhaust valve 122, a scavenging port 124, a scavenging reservoir 126, a cooler 128, a scavenging chamber 130 and a combustion chamber 132.

In the uniflow scavenging two-cycle engine 100, exhaust, intake, compression, combustion, and expansion are performed between two strokes, an up-stroke and a down-stroke, of the piston 112, and the piston 112 reciprocates in the cylinder 110. An upper end of a piston rod 112a is fixed to the piston 112. Also, a crosshead pin 114a of the crosshead 114 is connected to a lower end (a first end) of the piston rod 112a, and the crosshead 114 reciprocates together with the piston 112. The crosshead 114 is restricted from moving in a direction (a left and right direction in FIG. 1) perpendicular to a stroke direction of the piston 112 by a guide shoe 114b.

The crosshead pin 114a is inserted into a crosshead bearing 116a provided at an upper end (a second end) of the connecting rod 116, pivotally supported by the crosshead bearing 116a, and also supports the second end of the connecting rod 116. In this way, the first end of the piston rod 112a to which the piston 112 is fixed and the second end of the connecting rod 116 connected to the crankshaft 118 are connected to each other through the crosshead 114.

Further, a lower end of the connecting rod 116 has a structure which is connected to the crankshaft 118 so that the crankshaft 118 is rotated about the connecting rod 116. As a result, when the crosshead 114 reciprocates according to reciprocating movement of the piston 112, the crankshaft 118 is rotated in conjunction with the reciprocating movement thereof.

The exhaust port 120 is an opening provided at a cylinder head 110a located above a top dead center of the piston 112 and is opened and closed to discharge an exhaust gas generated in the cylinder 110 after combustion. The exhaust valve 122 is moved up and down at a predetermined timing by an exhaust valve drive device, which is not shown, to open and close the exhaust port 120. As described above, the exhaust gas discharged through the exhaust port 120 is supplied to a turbine side of a turbo charger C via an exhaust pipe 120a and then discharged to the outside.

The scavenging port 124 is a hole which passes through from an inner circumferential surface (an inner circumferential surface of a cylinder liner 110b) at a lower end side of the cylinder 110 to an outer circumferential surface thereof, and a plurality of scavenging ports 124 are provided all around the cylinder 110. The scavenging port 124 suctions an active gas into the cylinder 110 according to a sliding motion of the piston 112. The active gas includes an oxidizer such as oxygen, ozone or the like, or a mixture thereof (e.g., air).

The active gas (e.g., air) pressurized by a compressor of the turbo charger C is sealed in the scavenging reservoir 126 and cooled by the cooler 128. The cooled active gas is pressed into a scavenging chamber 130 formed in a cylinder jacket 110c. The active gas is suctioned into the cylinder 110 from the scavenging port 124 by a differential pressure between the scavenging chamber 130 and the cylinder 110.

A liquid fuel injection valve 134 is provided at the cylinder head 110a. In the gas operation mode, an appropriate amount of fuel oil is injected from the liquid fuel injection valve 134 at a desired point of time in an engine cycle. The fuel oil is vaporized by heat of the combustion chamber 132 surrounded by the cylinder head 110a, the cylinder liner 110b, and the piston 112, spontaneously ignited, burned in a short time, and extremely increases the temperature of the combustion chamber 132. Also, a gas fuel injection valve which is not shown is provided in the vicinity of the scavenging port 124 or at a portion of the cylinder 110 from the scavenging port 124 to the combustion chamber 132, and a fuel gas injected from the gas fuel injection valve and flowed into the cylinder 110 is heated by combustion heat of the fuel oil, thereby being reliably burned at a desired timing. The piston 112 reciprocates mainly by an expansion pressure due to the combustion of the fuel gas.

Here, the fuel gas is produced, for example, by gasifying liquefied natural gas (LNG). Also, the fuel gas is not limited to LNG, and, for example, liquefied petroleum gas (LPG), gas oil, heavy oil or the like may be gasified and applied as the fuel gas.

Meanwhile, in the diesel operation mode, the injection of the fuel gas from the gas fuel injection valve is stopped, and a larger amount of fuel oil than the fuel oil injection amount in the gas operation mode is also injected from the liquid fuel injection valve 134. The piston 112 reciprocates by an expansion pressure due to the combustion of the fuel oil rather than the fuel gas.

As described above, the uniflow scavenging two-cycle engine 100 selectively performs one of the gas operation mode and the diesel operation mode. A variable mechanism is provided in the uniflow scavenging two-cycle engine 100 to allow the compression ratio of the piston 112 to vary according to the selected mode. Hereinafter, the variable mechanism will be described in detail.

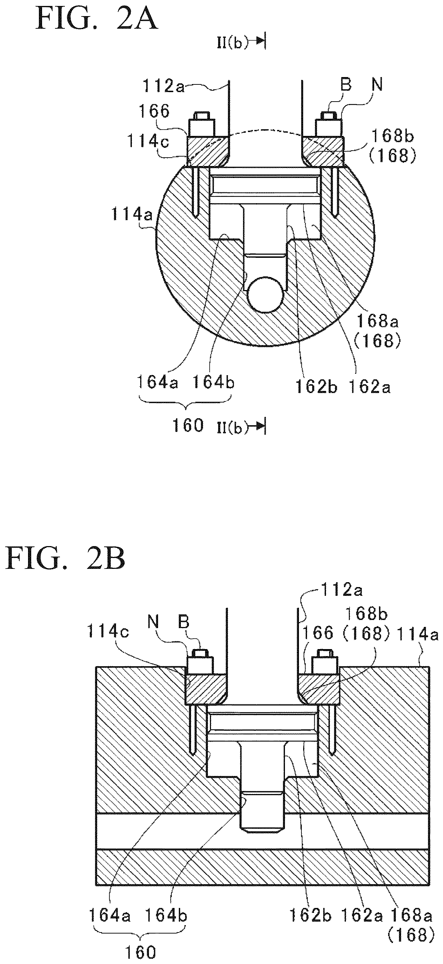

FIGS. 2A and 2B are views showing a connection portion between the piston rod 112a and the crosshead pin 114a, FIG. 2A shows an enlarged view of a portion of FIG. 1 surrounded by a chain line, and FIG. 2B shows a cross section taken along line II(b)-II(b) of FIG. 2A.

As shown in FIGS. 2A and 2B, the first end of the piston rod 112a is inserted into the crosshead pin 114a. Specifically, a connection hole 160 extending perpendicular to an axial direction (a left-right direction in FIG. 2B) of the crosshead pin 114a is formed in the crosshead pin 114a. A hydraulic chamber 168 is provided inside the connection hole 160, and the first end of the piston rod 112a is inserted into the hydraulic chamber 168. In this way, the crosshead pin 114a and the piston rod 112a are connected by inserting the first end of the piston rod 112a into the connection hole 160.

More specifically, a large diameter portion 162a at which an outer diameter of the piston rod 112a is larger than that of the first end side and a small diameter portion 162b which is located on the first end side with respect to the large diameter portion 162a and has an outer diameter smaller than that of the large diameter portion 162a are formed at the piston rod 112a.

Additionally, the connection hole 160 has a large diameter hole portion 164a which is located at a piston 112 side of the connection hole 160 and a small diameter hole portion 164b which is continuous with a connecting rod 116 side (a lower side in FIGS. 2A and 2B) of the large diameter hole portion 164a and has an inner diameter smaller than that of the large diameter hole portion 164a. Here, the large diameter hole portion 164a forms the hydraulic chamber 168.

The small diameter portion 162b of the piston rod 112a has a size which is set to be inserted into the small diameter hole portion 164b of the connection hole 160, and the larger diameter portion 162a of the piston rod 112a has a size which is set to be inserted into the large diameter hole portion 164a of the connection hole 160.

A fixing cover 166 of which an outer diameter is larger than that of the connection hole 160 is disposed to an upper end (the second end) side (an upper side in FIG. 2) of the piston rod 112a with respect to the larger diameter portion 162a of the piston rod 112a. The fixing cover 166 is an annular member, and the piston rod 112a is inserted therein from an upper side thereof. Also, a groove 114c recessed in a radial direction of the crosshead pin 114a is formed on an outer circumferential surface of the crosshead pin 114a, and the fixing cover 166 is fitted to an inside of the groove 114c. The fixing cover 166 is fastened to the crosshead pin 114a by a bolt B through a nut N.

Further, the hydraulic chamber 168 is divided into a first hydraulic chamber 168a (hydraulic chamber) and a second hydraulic chamber 168b (hydraulic chamber). The first hydraulic chamber 168a is surrounded by a stepped surface formed by an outer diameter difference between the large diameter portion 162a and the small diameter portion 162b, an inner circumferential surface of the large diameter hole portion 164a, and a stepped surface formed by an inner diameter difference between the large diameter hole portion 164a and the small diameter hole portion 164b.

The second hydraulic chamber 168b is surrounded by an end surface of the large diameter portion 162a on an upper end side of the piston rod 112a, the inner circumferential surface of the large diameter hole portion 164a, and the fixing cover 166. That is, the large diameter hole portion 164a (the hydraulic chamber 168) is partitioned into an upper side and a lower side by the larger diameter portion 162a of the piston rod 112a. Additionally, with the large diameter portion 162a as a boundary, the first hydraulic chamber 168a is formed by the large diameter hole portion 164a partitioned below the large diameter portion 162a in FIG. 2, and the second hydraulic chamber 168b is formed by the large diameter hole portion 164a partitioned above the large diameter portion 162a in FIG. 2.

Oil passages which are not shown are in communication with each of the first hydraulic chamber 168a and the second hydraulic chamber 168b, and the hydraulic oil discharged from a hydraulic pump is introduced therein. An entering depth to which the piston rod 112a enters the connection hole 160 is changed according to the oil pressure applied to each of the first hydraulic chamber 168a and the second hydraulic chamber 168b. Hereinafter, a state in which the oil pressure is applied to the first hydraulic chamber 168a and the second hydraulic chamber 168b will be described.

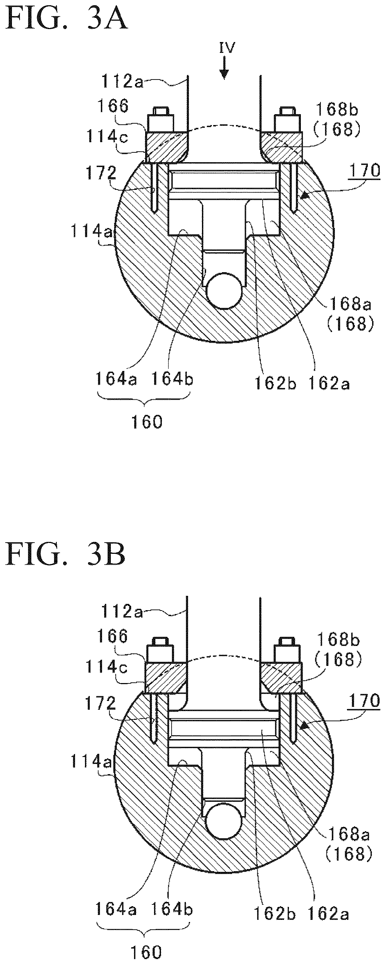

FIGS. 3A and 3B are views showing a change in a relative position between the piston rod 112a and the crosshead pin 114a, FIG. 3A shows a state in which the piston rod 112a has entered the connection hole 160 shallowly, and FIG. 3B shows a state in which the piston rod 112a has entered the connection hole 160 deeply.

A length of the first hydraulic chamber 168a in the stroke direction of the piston 112 is variable, and when the first hydraulic chamber 168a is sealed while the hydraulic oil is supplied into the first hydraulic chamber 168a, a state of FIG. 3A can be maintained.

Additionally, when the compression ratio is changed from the state of FIG. 3A, the hydraulic oil is discharged from the first hydraulic chamber 168a through the oil passage, which is not shown, by a compression force from the piston rod 112a and the crosshead pin 114a due to the reciprocating movement of the piston 112, and also the hydraulic oil is supplied into the second hydraulic chamber 168b.

Accordingly, as shown in FIG. 3B, a length of the first hydraulic chamber 168a in the stroke direction of the piston 112 is shortened. Meanwhile, in the second hydraulic chamber 168b, a length thereof in the stroke direction of the piston 112 is increased.

An entering position (the entering depth) to which the piston rod 112a enters the connection hole 160 (the hydraulic chamber) of the crosshead pin 114a is changed by a change in the length of each of the first hydraulic chamber 168a and the second hydraulic chamber 168b in the stroke direction of the piston 112.

That is, in the hydraulic chamber 168 provided in the crosshead pin 114a, the oil pressure is applied to the first end side of the piston rod 112a while the first end side of the piston rod 112a is inserted therein, and thus a relative position between the piston 112 and the crosshead pin 114a is changed. In this way, positions of the piston 112 at the top dead center and a bottom dead center are varied by changing a relative position between the piston rod 112a and the crosshead pin 114a.

However, when the hydraulic chamber 168 is provided inside the crosshead 114, the crosshead 114 may be deformed by an influence of the oil pressure inside the hydraulic chamber 168. In the embodiment, a deformation inhibiting layer 170 is provided to inhibit such deformation.

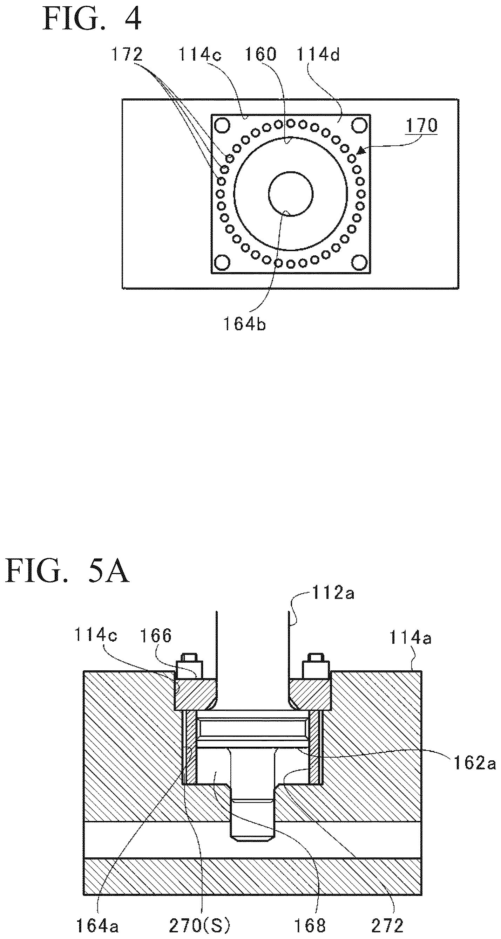

FIG. 4 is a view showing the deformation inhibiting layer 170 and is also a view showing the crosshead pin 114a as viewed from an arrow IV of FIG. 3A. A plurality of buffer holes 172 are provided at a bottom surface 114d of the groove 114c of the crosshead 114 in a circumferential direction of the connection hole 160. The plurality of buffer holes 172 are formed in a circumferential direction of the piston rod 112a at regular intervals and extend to a radial outer side of the hydraulic chamber 168 in the stroke direction of the piston 112 (referring to FIGS. 3A and 3B).

The deformation inhibiting layer 170 is a portion of the crosshead 114 in which the buffer holes 172 are formed and is located outward in a radial direction of the first end side of the piston rod 112a inserted into the hydraulic chamber 168. Since the deformation inhibiting layer 170 is formed, even when an inner wall of the hydraulic chamber 168 is deformed by the oil pressure inside the hydraulic chamber 168, such deformation is absorbed by deformation of each of the buffer holes 172 forming the deformation inhibiting layer 170 in the radial direction of the piston rod 112a. As a result, the deformation does not easily progress to an outer side of the deformation inhibiting layer 170. Therefore, the deformation of the crosshead pin 114a is inhibited, and thus degradation of bearing performance of the crosshead pin 114a can be suppressed.

FIGS. 5A to 5C are views showing a deformation inhibiting layer 270 and cylindrical members 272, 372 and 472 as modified examples. In a first modified example shown in FIG. 5A, the hydraulic chamber 168 is formed to be surrounded by an annular cylindrical member 272. The cylindrical member 272 allows the large diameter portion 162a of the piston rod 112a to be inserted therein, and is stowed in the large diameter hole portion 164a formed in the crosshead pin 114a and sealed by the fixing cover 166.

The inner circumferential surface of the large diameter hole portion 164a and an outer circumferential surface of the cylindrical member 272 are radially spaced apart from each other to form a gap S. The deformation inhibiting layer 270 is the gap S, and even when the cylindrical member 272 is deformed by the oil pressure in the hydraulic chamber 168, the deformation is absorbed by the gap S forming the deformation inhibiting layer 270 and thus does not progress to an outer side of the deformation inhibiting layer 270. As a result, the deformation of the outer side of the deformation inhibiting layer 270 is inhibited, and the degradation of the bearing performance of the crosshead pin 114a can be suppressed.

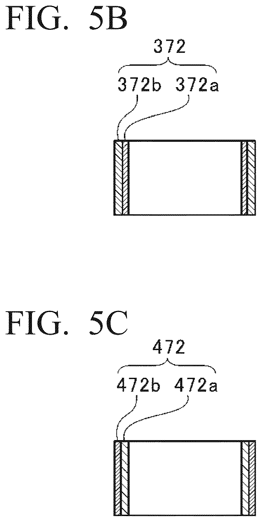

FIGS. 5B and 5C show the cylindrical member 372 (the deformation inhibiting member) of a second modified example and the cylindrical member 472 (the deformation inhibiting member) of a third modified example. In the first modified example, the cylindrical member 272 is deformed by receiving the oil pressure in the hydraulic chamber 168. At this point, when the amount of the deformation becomes too large, leakage of the hydraulic oil may occur. Therefore, in the second modified example and the third modified example, the cylindrical members 372 and 472 are strengthened. Like the cylindrical member 272, the cylindrical members 372 and 472 are disposed between the deformation inhibiting layer 270 (the gap S) and the hydraulic chamber 168.

As shown in FIG. 5B, the cylindrical member 372 of the second modified example includes an inner cylinder 372a and an outer cylinder 372b which are assembled to each other by shrink fitting or cooling fit, and a residual stress is generated in each of the inner cylinder 372a and the outer cylinder 372b.

As shown in FIG. 5C, the cylindrical member 472 of the third modified example includes an inner cylinder 472a and a reinforcing fiber layer 472b formed by winding reinforcing fibers around an outer circumferential surface of the inner cylinder 472a. The cylindrical members 372 and 472 have higher strength than the crosshead pin 114a.

According to the second modified example and the third modified example, even when the oil pressure in the hydraulic chamber 168 is increased, the deformation of the cylindrical members 372 and 472 is restrained within a range of the gap S forming the deformation inhibiting layer 270, and the degradation of the bearing performance of the crosshead pin 114a can be suppressed.

The above-described embodiment has described the case in which the deformation inhibiting layer 170 includes the plurality of buffer holes 172, but instead of the plurality of buffer holes 172, for example, an annular groove (a gap) which is formed as if the plurality of buffer holes 172 were connected in the circumferential direction of the piston rod 112a may be provided. However, since the deformation inhibiting layer 170 is formed to include the plurality of buffer holes 172, the deformation inhibiting layer 170 can be manufactured by simple machining.

Also, in addition to the deformation inhibiting layer 170 of the above-described embodiment, the cylindrical member 372 of the second modified example or the cylindrical member 472 of the third modified example may be disposed at an inner circumferential surface side of the large diameter hole portion 164a formed in the crosshead pin 114a. In this case, since the deformation of the cylindrical members 372 and 472 is inhibited, the deformation of the outer side of the deformation inhibiting layer 170 is further inhibited by the deformation of the deformation inhibiting layer 170.

While preferred embodiments of the present disclosure have been described above with reference to the accompanying drawings, the present disclosure is not limited to those examples. It is apparent that those who have ordinary skills in the art can make various changes or modifications within the scope of the appended claims.

### [Industrial Applicability]

The present disclosure can be applied to a crosshead engine in which a crosshead is connected to a piston rod.

### [Reference Signs List]

S Gap
100 Uniflow scavenging two-cycle engine (crosshead engine)
112 Piston
112a Piston rod
114 Crosshead
114a Crosshead pin
116 Connecting rod
116a Crosshead bearing
118 Crankshaft
168 Hydraulic chamber
168a First hydraulic chamber (hydraulic chamber)
168b Second hydraulic chamber (hydraulic chamber)
170 Deformation inhibiting layer
372, 472 Cylindrical member (deformation inhibiting member)

## Claims

1. A crosshead engine (100)_in which a first end of a piston rod (112a) fixed to a piston (112)_and a second end of a connecting rod (116) connected to a crankshaft (118)_are connected through a crosshead (114),
wherein the crosshead (114)_comprises:
a crosshead bearing (116a)_provided at the second end of the connecting rod (116), and
a crosshead pin (114a)_pivotally supported by the crosshead bearing (116a),
the crosshead engine (100) **characterized by** including:
a hydraulic chamber (168)_provided in the crosshead pin (114a)_and configured to apply an oil pressure to a first end side of the piston rod (112a)_when the first end side of the piston rod (112a)_is inserted therein, thereby changing a relative position between the piston (112)_and the crosshead pin (114a), and
a deformation inhibiting layer (170, 270)_provided at the crosshead pin (114a), located outward in a radial direction of the first end of the piston rod (112a)_inserted into the hydraulic chamber (168)_and configured to inhibit deformation of the crosshead pin (114a)_due to an oil pressure in the hydraulic chamber (168).

2. The crosshead engine (100)_according to claim 1, wherein the deformation inhibiting layer (170)_includes a plurality of buffer holes (172) which are formed to be spaced apart from each other at regular intervals in a circumferential direction of the piston rod (112a).

3. The crosshead engine (100)_according to claim 1, wherein the deformation inhibiting layer (270)_is a gap (S)_formed at the crosshead pin (114a).

4. The crosshead engine (100) according to claim 1, wherein a connection hole (160) extending perpendicular to an axial direction of the crosshead pin (114a) is formed in the crosshead pin (114a), and
the hydraulic chamber (168) is provided inside the connection hole (160).

5. The crosshead engine (100) according to claim 4, wherein the connection hole (160) has a large diameter hole portion (164a) which is located at the piston (112) side of the connection hole (160), and
the large diameter hole portion (164a) forms the hydraulic chamber (168).

6. The crosshead engine (100) according to claim 4, wherein the connection hole (160) has a large diameter hole portion (164a) which is located at the piston (112) side of the connection hole (160),
an annular cylindrical member (272, 372, 472) is stowed in the large diameter hole portion (164a) formed in the crosshead pin (114a) and sealed by a fixing cover (166) being an annular member,
the hydraulic chamber (168) is formed to be surrounded by the cylindrical member (272, 372, 472), and
an inner circumferential surface of the large diameter hole portion (164a) and an outer circumferential surface of the cylindrical member (272, 372, 472) are radially spaced apart from each other to form a gap (S) forming the deformation inhibiting layer (270).

7. The crosshead engine (100)_according to claim 6, wherein the cylindrical member (372, 472) has higher strength than the crosshead pin (114a) and is disposed between the deformation inhibiting layer (270)_and the hydraulic chamber (168).

8. The crosshead engine (100) according to claim 7, wherein the cylindrical member (372, 472) is harder to deform than the crosshead pin (114a) and is disposed between the deformation inhibiting layer (270) and the hydraulic chamber (168).

9. The crosshead engine (100) according to claim 7, wherein the cylindrical member (372, 472) has higher strength than the inner circumferential surface of the large diameter hole portion (164a) of the crosshead pin (114a) and is disposed between the deformation inhibiting layer (270) and the hydraulic chamber (168).

10. The crosshead engine (100) according to claim 7, wherein the cylindrical member (372) includes an inner cylinder (372a) and an outer cylinder (372b) which are assembled to each other by shrink fitting or cooling fit.

11. The crosshead engine (100) according to claim 7, wherein the cylindrical member (472) includes an inner cylinder (472a) and a reinforcing fiber layer (472b) formed by winding reinforcing fibers around an outer circumferential surface of the inner cylinder (472a).

## Patentansprüche

1. Kreuzkopfmotor (100), in dem ein erstes Ende einer Kolbenstange (112a), die an einem Kolben (112) befestigt ist, und ein zweites Ende einer Pleuelstange (116), die mit einer Kurbelwelle (118) verbunden ist, durch einen Kreuzkopf (114) miteinander verbunden sind,
wobei der Kreuzkopf (114) Folgendes hat:
ein Kreuzkopflager (116a), das an dem zweiten Ende der Pleuelstange (116) versehen ist, und
einem Kreuzkopfzapfen (114a), der durch das Kreuzkopflager (116a) drehbar gestützt ist,
wobei der Kreuzkopfmotor (100) **dadurch gekennzeichnet, dass** er Folgendes hat:
eine Hydraulikkammer (168), die in dem Kreuzkopfzapfen (114a) vorgesehen ist und konfiguriert ist, einen Öldruck auf eine erste Endseite der Kolbenstange (112a) auszuüben, wenn die erste Endseite der Kolbenstange (112a) darin eingesetzt ist, wodurch sie eine Relativposition zwischen dem Kolben (112) und dem Kreuzkopfzapfen (114a) ändert, und
eine Verformungshemmschicht (170, 270), die an dem Kreuzkopfzapfen (114a) vorgesehen ist, in einer radialen Richtung außerhalb des in der Hydraulikkammer (168) eingesetzten ersten Endes der Kolbenstange (112a) angeordnet ist und konfiguriert ist, eine Verformung des Kreuzkopfzapfens (114a) aufgrund eines Öldrucks in der Hydraulikkammer (168) zu hemmen.

2. Kreuzkopfmotor (100) nach Anspruch 1, wobei die Verformungshemmschicht (170) eine Vielzahl von Pufferlöchern (172) hat, die ausgebildet sind, sodass sie in einer Umfangsrichtung der Kolbenstange (112a) mit regelmäßigen Abständen voneinander beabstandet sind.

3. Kreuzkopfmotor (100) nach Anspruch 1, wobei die Verformungshemmschicht (270) ein Spalt (S) ist, der an dem Kreuzkopf (114a) ausgebildet ist.

4. Kreuzkopfmotor (100) nach Anspruch 1, wobei ein Verbindungsloch (160) in dem Kreuzkopfzapfen (114a) ausgebildet ist, das sich senkrecht zu einer axialen Richtung des Kreuzkopfzapfens (114a) erstreckt, und
die Hydraulikkammer (168) innerhalb des Verbindungslochs (160) vorgesehen ist.

5. Kreuzkopfmotor (100) nach Anspruch 4, wobei das Verbindungsloch (160) einen Großdurchmesserabschnitt (164a) hat, der auf der Kolben-(112)-Seite des Verbindungslochs (160) angeordnet ist, und
der Großdurchmesserabschnitt (164a) die Hydraulikkammer (168) bildet.

6. Kreuzkopfmotor (100) nach Anspruch 4, wobei das Verbindungsloch (160) einen Großdurchmesserabschnitt (164a) hat, der auf der Kolben-(112)-Seite des Verbindungslochs (160) angeordnet ist,
ein ringartiges zylinderförmiges Bauteil (272, 372, 472) in dem in dem Kreuzkopfzapfen (114a) ausgebildeten Großdurchmesserabschnitt (164a) verstaut ist und durch eine Fixierabdeckung (166) abgedichtet ist, die ein ringartiges Bauteil ist,
die Hydraulikkammer (168) ausgebildet ist, sodass sie durch das zylinderförmige Bauteil (272, 372, 472) umgeben ist, und
eine Innenumfangsfläche des Großdurchmesserabschnitts (164a) und eine Außenumfangsfläche des zylinderförmigen Bauteils (272, 372, 472) radial voneinander beabstandet sind, sodass sie einen Spalt (S) bilden, der die Verformungshemmschicht (270) bildet.

7. Kreuzkopfmotor (100) nach Anspruch 6, wobei das zylinderförmige Bauteil (372, 472) eine höhere Festigkeit hat als der Kreuzkopfzapfen (114a), und zwischen der Verformungshemmschicht (270) und der Hydraulikkammer (168) angeordnet ist.

8. Kreuzkopfmotor (100) nach Anspruch 7, wobei das zylinderförmige Bauteil (372, 472) schwerer zu verformen ist als der Kreuzkopfzapfen (114a), und zwischen der Verformungshemmschicht (270) und der Hydraulikkammer (168) angeordnet ist.

9. Kreuzkopfmotor (100) nach Anspruch 7, wobei das zylinderförmige Bauteil (372, 472) eine höhere Festigkeit hat als die Innenumfangsfläche des Großdurchmesserabschnitts (164a) des Kreuzkopfzapfens (114a), und zwischen der Verformungshemmschicht (270) und der Hydraulikkammer (168) angeordnet ist.

10. Kreuzkopfmotor (100) nach Anspruch 7, wobei das zylinderförmige Bauteil (372) einen Innenzylinder (372a) und einen Außenzylinder (372b) hat, die durch Aufschrumpfen oder Kaltdehnen miteinander zusammengebaut sind.

11. Kreuzkopfmotor (100) nach Anspruch 7, wobei das zylinderförmige Bauteil (472) einen Innenzylinder (472a) und eine Verstärkungsfaserschicht (472b) hat, die durch Wickeln von Verstärkungsfasern um eine Außenumfangsfläche des Innenzylinders (472a) ausgebildet ist.

## Revendications

1. Moteur à crosse (100) dans lequel une première extrémité d'une tige de piston (112a) fixée à un piston (112) et une seconde extrémité d'une tige de liaison (116) reliée à un vilebrequin (118) sont reliées au travers d'une crosse (114), dans lequel la crosse (114) comprend :
un palier de crosse (116a) prévu au niveau de la seconde extrémité de la tige de liaison (116), et
un axe de crosse (114a) porté de manière pivotante par le palier de crosse (116a),
le moteur à crosse (100) étant **caractérisé en ce qu'**il inclut :
une chambre hydraulique (168) prévue dans l'axe de crosse (114a) et configurée pour appliquer une pression d'huile sur un côté de la première extrémité de la tige de piston (112a) lorsque le côté de la première extrémité de la tige de piston (112a) est inséré dans celle-ci, modifiant ainsi une position relative entre le piston (112) et l'axe de crosse (114a), et
une couche d'inhibition de déformation (170, 270) prévue au niveau de l'axe de crosse (114a), située vers l'extérieur dans une direction radiale de la première extrémité de la tige de piston (112a) insérée dans la chambre hydraulique (168) et configurée pour inhiber la déformation de l'axe de crosse (114a) due à une pression d'huile dans la chambre hydraulique (168).

2. Moteur à crosse (100) selon la revendication 1, dans lequel la couche d'inhibition de déformation (170) inclut une pluralité de trous tampons (172) qui sont formés pour être espacés les uns des autres à intervalles réguliers dans une direction circonférentielle de la tige de piston (112a).

3. Moteur à crosse (100) selon la revendication 1, dans lequel la couche d'inhibition de déformation (270) est un interstice (S) formé au niveau de l'axe de crosse (114a).

4. Moteur à crosse (100) selon la revendication 1, dans lequel un trou de liaison (160) s'étendant perpendiculairement à une direction axiale de l'axe de crosse (114a) est formé dans l'axe de crosse (114a), et
la chambre hydraulique (168) est prévue à l'intérieur du trou de liaison (160).

5. Moteur à crosse (100) selon la revendication 4, dans lequel le trou de liaison (160) a une partie de trou de grand diamètre (164a) qui est située du côté piston (112) du trou de liaison (160), et
la partie de trou de grand diamètre (164a) forme la chambre hydraulique (168).

6. Moteur à crosse (100) selon la revendication 4, dans lequel le trou de liaison (160) a une partie de trou de grand diamètre (164a) qui est située du côté piston (112) du trou de liaison (160),
un élément cylindrique annulaire (272, 372, 472) est rentré dans la partie de trou de grand diamètre (164a) formée dans l'axe de crosse (114a) et fermée hermétiquement par un couvercle de fixation (166) qui est un élément annulaire,
la chambre hydraulique (168) est formée pour être entourée par l'élément cylindrique (272, 372, 472), et
une surface circonférentielle interne de la partie de trou de grand diamètre (164a) et une surface circonférentielle externe de l'élément cylindrique (272, 372, 472) sont espacées radialement l'une de l'autre pour former un interstice (S) formant la couche d'inhibition de déformation (270).

7. Moteur à crosse (100) selon la revendication 6, dans lequel l'élément cylindrique (372, 472) a une résistance supérieure à l'axe de crosse (114a) et est disposé entre la couche d'inhibition de déformation (270) et la chambre hydraulique (168).

8. Moteur à crosse (100) selon la revendication 7, dans lequel l'élément cylindrique (372, 472) est plus dur à déformer que l'axe de crosse (114a) et est disposé entre la couche d'inhibition de déformation (270) et la chambre hydraulique (168).

9. Moteur à crosse (100) selon la revendication 7, dans lequel l'élément cylindrique (372, 472) a une résistance supérieure à la surface circonférentielle interne de la partie de trou de grand diamètre (164a) de l'axe de crosse (114a) et est disposé entre la couche d'inhibition de déformation (270) et la chambre hydraulique (168).

10. Moteur à crosse (100) selon la revendication 7, dans lequel l'élément cylindrique (372) inclut un cylindre interne (372a) et un cylindre externe (372b) qui sont assemblés l'un à l'autre par ajustement par contraction ou ajustement par refroidissement.

11. Moteur à crosse (100) selon la revendication 7, dans lequel l'élément cylindrique (472) inclut un cylindre interne (472a) et une couche de fibres de renforcement (472b) formée par enroulement de fibres de renforcement autour d'une surface circonférentielle externe du cylindre interne (472a).
